# EUROPÄISCHE PATENTSCHRIFT

(11) **EP 0 569 866 B1**
(45) Veröffentlichungstag und Bekanntmachung des Hinweises auf die Patenterteilung: **13.03.1996**
(21) Anmeldenummer: 93107406.6
(22) Anmeldetag: 07.05.1993
(51) Int. Cl.: B29C 47/68

(54) **Filter für Kunststoffschmelzen**
Filter for synthetic plastic melts
Filtre pour masses fondues de matière plastique

(30) Priorität: 11.05.1992 DE 4215472; 21.10.1992 DE 4235523
(43) Veröffentlichungstag der Anmeldung: 18.11.1993
(73) Patentinhaber: GNEUSS KUNSTSTOFFTECHNIK GmbH, D-32549 Bad Oeynhausen (DE)
(72) Erfinder: Gneuss, Detlef, W-4970 Bad Oeynhausen (DE)
(74) Vertreter: Grosse, Dietrich, Dipl.-Ing.

(56) Entgegenhaltungen:
- CH-A- 593 786
- DE-A- 3 302 343
- DE-C- 3 522 050

## Beschreibung

Die Erfindung betrifft ein Schmelzefilter für die Reinigung von insbesondere von Extrudern abgegebene Kunststoffschmelzen mit einer zwischen zwei Platinen drehantreibbaren Siebscheibe, die entlang einer Kreisbahn Ausnehmungen aufweist, in die als Filter Siebeinsätze in Form jeweils eines mit einer Filterschichten stützenden Lochscheibe ausgestatteten Ringes einsetzbar und entnehmbar sind, und mit einem die Platinen im Bereiche der Kreisbahn durchstoßenden Schmelzekanal, sowie mit einem der Siebscheibe zugeordneten, kraftbetriebenen Klinkenantrieb, bei dem jeweils mindestens zwei der Siebeinsätze im Schmelzestrom gehalten sind.

Derartige Schmelzefilter sind allgemein bekannt; sie werden verbreitet eingesetzt und haben sich in der Praxis bewährt, da bei der zyklischen Benutzung von Filtern eine Filterreinigung oder ein Filterwechsel vorgenommen werden kann, ohne daß der Schmelzestrom unterbrochen oder wesentlich beeinträchtigt wird. Um einerseits den durch die Filterschichten gegebenen Widerstand abzusenken und andererseits den Druckabfall am Schmelzefilter abzusenken werden Siebscheiben mit etwa nierenförmigen Ausnehmungen und diesen angepaßten Siebeinsätzen benutzt. Werden die zwischen diesen stehen gebliebenen Stege schmal ausgeführt, so ergibt sich eine dichte Packung innerhalb der quer durch den Schmelzekanal geführten Zone der Filterscheibe, und in dem mit kreisförmigen Querschnitt ausgeführten Schmelzekanal sind hierbei mehr als ein Siebeinsatz in diesen eingeschwenkt. Damit ergibt sich die Möglichkeit der Erhöhung der jeweils wirksamen Filterfläche, und beim Weiterschwenken um nur eine Filterteilung läßt sich jeweils einer der Filter frisch in die Arbeitsposition einschieben und der andere innerhalb der Arbeitsposition weiterrücken, der schon einige Zeit wirksam war und damit bereits begonnen hat, sich zuzusetzen. Dies gibt geringere Schwankungen des Druckabfalles, als wenn beide Filter vollgesetzt waren und gegen frische Filterschichten ausgetauscht werden. Als nachteilig hat es sich aber hierbei gezeigt, daß ein einfacher Schmelzekanal, gegebenenfalls auch mit Querfurchen ausgestattet, keinen die Filter jeweils über ihre gesamte Fläche gleichmäßig durchsetzenden Schmelzestrom bewirkt. Unvorteilhaft macht sich weiterhin bemerkbar, daß die Herstellung einer nierenförmige Ausnehmungen aufweisenden Filterscheibe sowie der diesen angepaßten Siebeinsätze einen nachteilig hohen Aufwand bedingt und durch die erforderliche Anpassung an eine durch die Form der Ausnehmungen bestimmte Stellung auch das Einführen frisch bestückter bzw. gereinigter Siebeinsätze erschwert.

Die Erfindung geht daher von der Aufgabe aus, bei einem der Gattung entsprechenden Schmelzefilter die Herstellungskosten zu senken und die Bedienung, insbesondere das Entnehmen und Einführen von Siebeinsätzen, zu vereinfachen, ohne eine Minderung der jeweils im Betriebe zur Verfügung stehenden Siebflächen in Kauf zu nehmen und damit bspw. höhere Druckabfälle überwinden zu müssen, sowie günstige Betriebseigenschaften durch eine gleichmäßige Beaufschlagung aller in den Schmelzekanal eingeschwenkten Flächenbereiche der Siebeinsätze zu erreichen.

Gelöst wird diese Aufgabe, indem der Schmelzekanal eine kreisförmige Eintrittsöffnung aufweist, von der aus innerhalb der einen, ersten Platine er sich mit zunehmender Eindringtiefe zunächst in Umfangsrichtung der Kreisbahn erweitert und dann teilt und mit zwei voneinander getrennten Teilmündungen auf die in Arbeitsposition stehende Siebeinsätze gerichtet ist, und indem hinter der Siebscheiben diesen Teilmündungen gegenüberstehend zwei Schmelze-Teilkanäle auf die kreisförmige Austrittsöffnung der anderen, zweiten Platine zulaufen. Durch die Benutzung der einfachen geometrischen Grundform des Kreises sowohl für die Ausnehmungen der Siebscheibe als auch der einzusetzenden Siebeinsätze mit Lochplatten wird deren wohlfeile Herstellung mit einfachen Arbeitsgängen gesichert, und auch die Handhabung, insbesondere der Austausch zugesetzter Siebflächen, üblicherweise unter Herausnahme zugesetzter Siebeinsätze und Wiedereinsetzen gereinigte oder erneuerte Siebschichten aufweisender Siebeinsätze, wird stark vereinfacht. Gleichzeitig wird durch die Ausbildung sowohl der Siebeinsätze als auch des Schmelzekanales ein strömungstechnisch günstiger Durchsatz erreicht, und die Siebflächen werden auch parallel und über ihren vollen Querschnitt angeströmt, so daß eine günstige und gleichmäßige Durchsetzung der Filterflächen erfolgt, die sich als günstiger erweisen als jene, die sich bei der dichten Packung von Siebeinsätzen mit nierenförmigen Grundflächen ergeben.

Ähnlich gestaltete Kanäle sind bspw. aus der Broschüre "Siebwechseleinrichtungen zur Verarbeitung von Thermoplasten" der Firma Maschinenfabrik Joachim Kreyenborg & Co. GmbH, Münster, bekannt. Hier allerdings dienen sie nur zur umschaltbaren Zuleitung von Schmelze zu Siebflächen: Während des Siebwechsels ist jeweils nur einer der Kanäle wirksam, und der Aufbau der dort benutzten, verschiebbare Bolzen aufweisenden Siebwechsler erfordert des Durchmessers der Siebbolzen wegen eine stärkere Schränkung der Kanäle.

Zweckmäßige und vorteilhafte Weiterbildungen der Erfindung sind in den Unteransprüchen gekennzeichnet.

Erläutert werden die Merkmale der Erfindung anhand der folgenden Beschreibung eines Ausführungsbeispieles in Verbindung mit dieses darstellenden Zeichnungen Es zeigen hierbei:
- Figur 1: eine schematische Seitenansicht des Schmelzefilters,
- Figur 2: eine teilweise nach Linie II-II geschnittene Aufsicht auf den Schmelzefilter der Fig. 1,
- Figur 3: einen Vertikalschnitt durch den Schmelzefilter der Fig. 1,
- Figuren 4 und 5: schematisch die Siebscheibe des Schmelzefilters der Fig. 1 von der Ebene der zweiten Platine aus betrachtet, und
- Figuren 6 und 7: einen die Achse des Schmelzekanals aufweisenden Vertikalschnitt durch Gehäuse und Siebscheibe des Schmelzefilters der Fig. 1 in unterschiedlichen Stellungen der Siebscheibe.

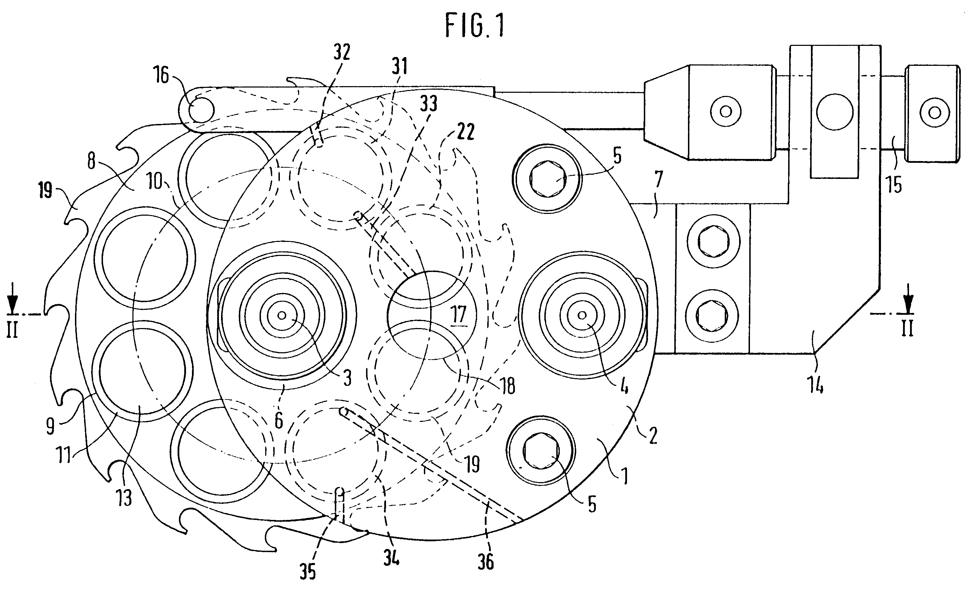

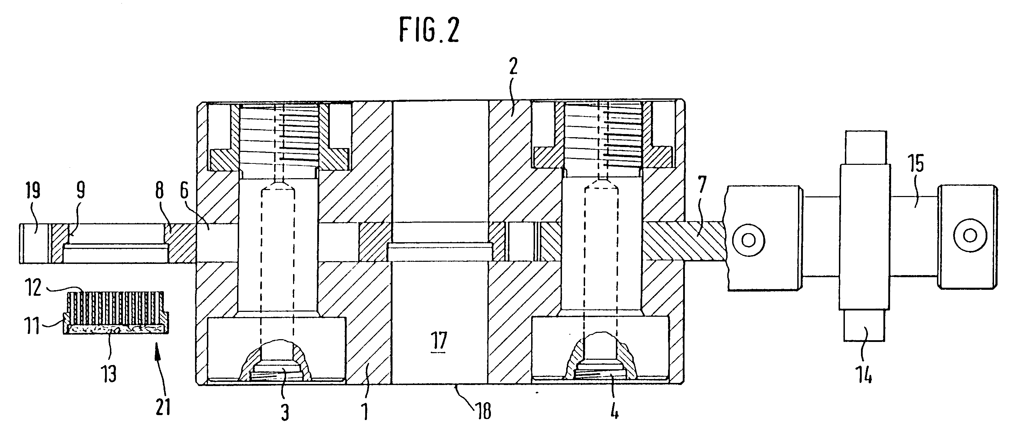

In der Fig. 1 ist in einer Seitenansicht ein Schmelzefilter gezeigt, der zwei hintereinanderliegende Platinen 1 und 2 aufweist, die vermittels von Schraubbolzen 3 bis 5 über ein Zylinderstück 6 sowie ein Distanzstück 7 gegeneinander verspannt sind. Das Zylinderstück 6 wird von einer Siebscheibe 8 umgriffen, die mit entlang einer Kreisbahn 10 angeordneten Ausnehmungen 9 ausgestattet ist. In die Ausnehmungen sind, wie auch Fig. 2 zeigt, Ringe 11 eingesetzt, die mit einer Lochplatte 12 ausgestattet sind, die von Filterschichten 13 überfangen sind. In der teilweise geschnittenen Aufsicht der Fig. 2 ist einer dieser einsetzbaren und herausnehmbaren, aus Ring 11, Lochplatte 12 und Filterschichten 13 bestehenden Siebeinsätze 21 herausgezogen neben der Siebscheibe 8 dargestellt.

Das Distanzstück 7 ist mit einem Tragarm 14 verbunden, an den ein Druckmittelzylinder 15 angelenkt ist, dessen verlängerte Kolbenstange mit einem Schaltstift 16 ausgestattet ist, und der Umfang der Siebscheibe 8 ist mit Klinken 19 versehen, so daß durch Betätigen des Druckmittelzylinders der Schaltstift 16 die Siebscheibe 8 jeweils um einen Teilbetrag einer Drehung im Rechtssinne zu drehen vermag.

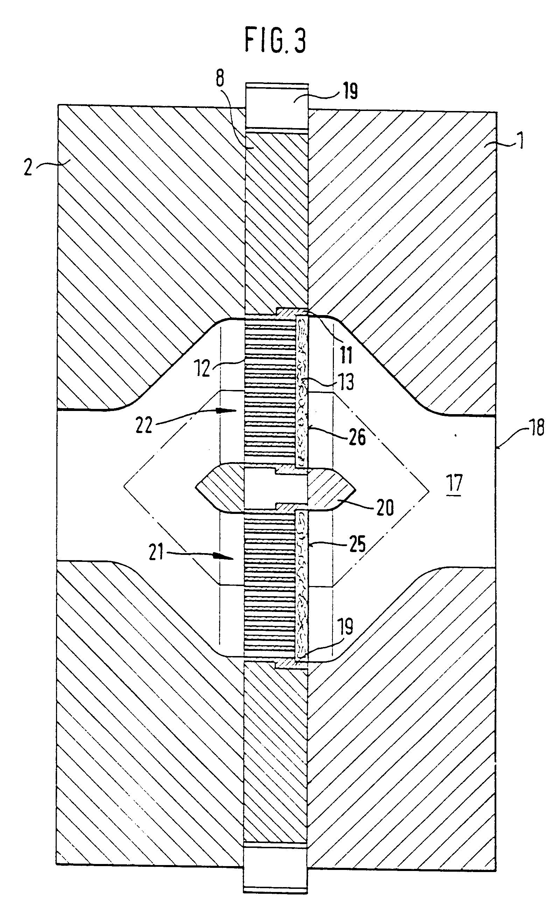

Die beiden Platinen 1 und 2 sind mit einem Schmelzekanal 17 versehen, dessen Eintrittsöffnung 18 in die Platine 1 einen kreisförmigen Querschnitt aufweist, und der sich von dort auf die kreisförmigen Filterschichten der beiden in Arbeitsposition stehenden Siebeinsätze 21 und 22 erstreckt, so daß er mit zunehmender Tiefe innerhalb der Platine bei im wesentlichen gleicher Breite sich in seiner vertikal gemessenen Höhe steigert und schließlich sich in zwei Teilkanäle aufteilt. Gezeigt ist dieses im Vertikalschnitt der Fig. 3, welche die beiden Platinen 1 und 2 mit dem eingearbeiteten Schmelzekanal 17 darstellt, der, von der Eintrittsöffnung 18 ausgehend, sich zunächst in vertikaler Richtung ausweitet und dann trennt, so daß eine Art Brücke 20 im Bereiche der der Siebscheibe 8 zugewendeten Flanke bestehenbleibt. Um strömungstechnisch günstige Kanäle zu erhalten, erfolgt die Zuführung zunächst über eine kurze Strecke ohne Aufweitung, und diese Aufweitung setzt dann nicht mit einem Knick, sondern mit abgerundeten Flächen ein, so wie auch die Enden dieser Teilkanäle, deren Teilmündungen 25 und 26 der die Siebeinsätze 21, 22 aufweisenden Ebene parallel stehen, sich abgerundet anschließen. Entsprechend der Zuleitung der Schmelze ist dann auch deren Ableitung in der Platine 2 ausgebildet.

Günstige Strömungseigenschaften werden auch dadurch erreicht, daß die Kreisbahn 10, die den Teilkreis für die Ausnehmungen 9 bildet, auf den Außendurchmesser der Ringe 11 so abgestimmt ist, daß die zwischen den Ringen verbleibenden Stege der Siebscheibe 8 schmal gehalten sind und damit die beiden Schmelze-Teilkanäle nicht sehr stark zu divergieren haben.

Bei der Gestaltung der Grundflächen der Platinen 1 und 2 hat es sich bewährt, diese einseitig nur relativ geringfügig oder praktisch gar nicht über die Grundfläche des Zylinderstückes 6 hinausreichen zu lassen, und ebenso hat es sich bewährt, die Platinen von der Mittellinie aus nach rechts herüberzuziehen, um einen möglichst großen Teil der Scheibe den Arbeitspositionen gegenüberliegend freizuhalten, so daß das Austauschen von Siebeinsätzen 21, 22 respective das Herausnehmen und Wiedereinschieben von Ringen 11 leicht durchführbar ist.

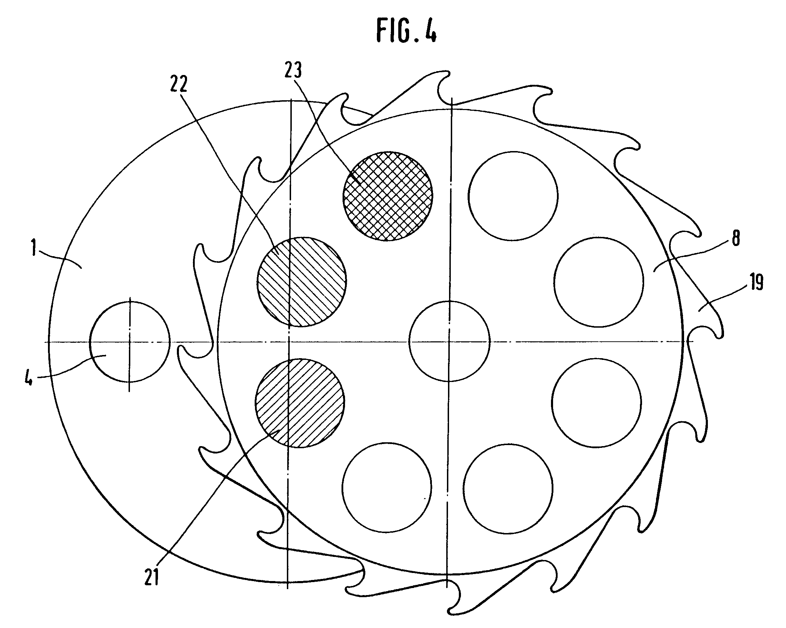

Der praktische Betrieb wird anhand der folgenden Zeichnungen erläutert. So zeigt die Fig. 4 schematisch eine Siebscheibe 8 gegen die Platine 1 betrachtet. Hierbei sind von den acht in Ausnehmungen 9 gehaltenen Siebeinsätzen die Siebeinsätze 21, 22 und 23 durch unterschiedliche Schraffuren hervorgehoben. Die Siebeinsätze 21 und 22 stehen hierbei, wie auch in Fig. 3 gezeigt, direkt vor den beiden Teilmündungen des in Teilkanäle aufgeteilten Schmelzekanales 17 und werden hierbei vom Schmelzestrom direkt durchsetzt. Der Mangel an dichten Packung, wie sie bisher durch nierenförmige Ausbildung der Siebeinsätze erreicht wurde, wird hier dadurch kompensiert, daß gleichzeitig zwei kreisförmige Siebeinsätze 21 und 22 in Wirkstellung stehen. Der Siebeinsatz 23 ist bereits in eine der Ausnehmungen 9 eingesetzt und steht als nächster vor einer der Teilmündungen des Schmelzekanales.

Die Siebscheibe 8 ist, wie Fig. 1 und 4 zeigen, vorteilhaft mit einer Anzahl von Klinken 19 bestückt, die das einfache oder ein Mehrfaches, vorzugsweise und in Fig. 1 und 4 dargestellt, das Doppelte der Anzahl der Ausnehmungen 9 beträgt. So kann bspw. durch zweifaches Schalten des Schaltstiftes 16 des Druckmittelzylinders 15 bzw. ein Schalten desselben um einen zwei Klinken erfassenden Hub ein Austausch der Siebeinsätze erfolgen, bei dem grundsätzlich ein den Fign. 3 und 4 gleiches Bild wieder erreicht wird; jedoch ist dann der Siebeinsatz 21 nach unten links aus dem Schmelzekanal bzw. von der unteren der beiden Teilmündungen ausgefahren, der schon teilweise zugesetzte Siebeinsatz 22 ist von der oberen der Teilmündungen zur unteren vorgerückt und betätigt sich weiterhin an der Reinigung des Schmelzestromes. Der Siebeinsatz 23 ist aus seiner inaktiven Stellung vor die obere der Teilmündungen und damit in den Schmelzestrom eingerückt.

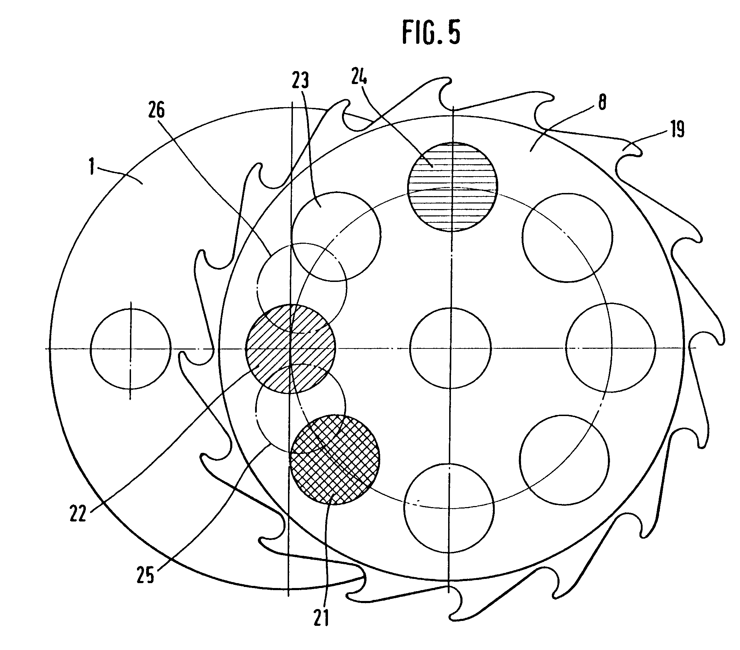

Es hat sich aber auch bewährt, entweder zusätzlich weitere Zwischenstellungen zu benutzen, d.h. die Siebscheibe 8 nicht jeweils um zwei Schaltwinkel der Klinken 19 vorwärts zu schalten, sondern nur um einen Schaltwinkel bzw. um eine Klinke, so daß das in Fig. 5 dargestellte Bild sich ergibt. Es besteht darüber hinaus aber auch die Möglichkeit, ausschließlich Stellungen entsprechend der Fig. 5 zu benutzen und die nächste dieser Stellungen durch Weiterschalten um zwei Teilungswinkel der Klinken 19 gleichartig wieder zu erhalten.

In der Fig. 5 sind die Teilmündungen 25 und 26 des Schmelzekanales 17 gut sichtbar, da sie nicht mehr, wie bspw. in Fig. 4, mit den Konturen der Ausnehmungen 9 bzw. der Siebeinsätze 21 und 22 sich decken. Da diese Teilmündungen 25 und 26 jedoch hinter der Siebscheibe 8 und deren Siebeinsätzen 21, 22 bzw. 23 stehen, sind sie in Fig. 5 strichpunktiert dargestellt.

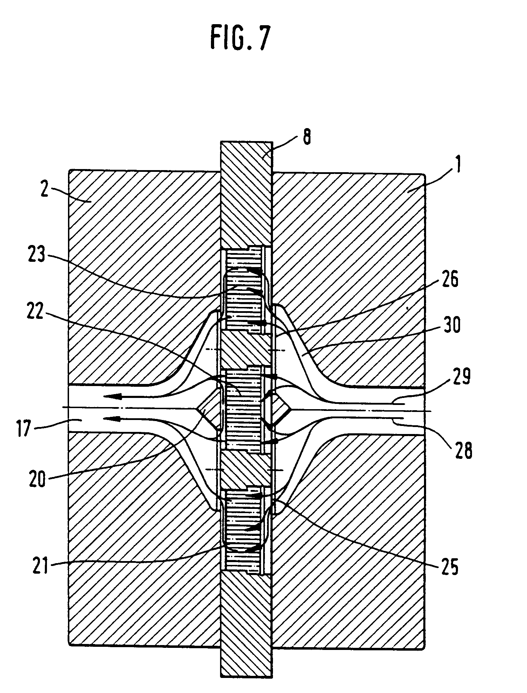

Diese Fig. 5 zeigt eine Arbeitsweise, bei der der am weitesten vorne stehende Siebeinsatz 21 die Teilmündung 25 schon mit großen Bereichen seiner Fläche verlassen hat. Wie anhand der Fig. 7 noch erläutert werden wird, besteht für die Kunststoffschmelze aber durchaus die Möglichkeit, über den überdeckenden Bereich die den Siebeinsatz 21 enthaltende Ausnehmung 9 und damit die gesamte Siebfläche des Siebeinsatzes 21 zu erreichen. Gleichartig wird der Siebeinsatz 22 beaufschlagt, der von Teilbereichen der Teilmündung 25 ebenso übergriffen ist wie von Bereichen der Teilmündung 26, so daß die zu reinigende Schmelze auch diesen Siebeinsatz über seine gesamte Eintrittsfläche hin zu durchsetzen vermag. Schließlich wird auch der Siebeinsatz 23, wenn auch nur bereichsweise, von der Teilmündung 26 übergriffen und über diese mit Schmelze versorgt. Das bedeutet letztlich, daß bei einer Aufteilung des Schmelzekanals in zwei Teilkanäle die nutzbaren Filterflächen in dieser Stellung der Siebeinsätze das Dreifache der Fläche eines Siebeinsatzes betragen. Es bedeutet aber weiterhin auch noch, daß, beim nächsten Schalten bspw. um zwei Teilwinkel der Klinken 19, der Siebeinsatz 21 aus dem Schmelzestrom ausgefahren und der Siebeinsatz 22 so eingefahren wird, daß er dann an die Stelle des dargestellten Siebeinsatzes 21 tritt. Das bedeutet letztlich, daß bei der anhand der Fig. 4 erläuterten Stellung nach völligem Zusetzen des Siebeinsatzes 21 und teilweisem Zusetzen des Siebeinsatzes 22 eine Weiterschaltung erfolgt und dann ein teilweise zugesetzter Siebeinsatz 22 und ein frischer Siebeinsatz 23 in Wirkstellung gelangen. Die Änderung des Druckabfalles durch das Weiterschalten entspricht also nicht dem Austausch völlig zugesetzter Siebeinsätze gegen frische, sondern ist schon nach Fig. 4 gegenüber dieser gemindert. Bei den Stellungen der wirksamen Siebeinsätze nach Fig. 5 dagegen werden ein zugesetzter Siebeinsatz 21 aus dem Schmelzestrom ausgefahren und ein frischer Siebeinsatz 24 eingefahren, und ein nur mäßig zugesetzter Siebeinsatz 23 und ein bereits stärker benutzter Siebeinsatz 22 werden weitergeschaltet, so daß der hierbei an den Siebeinsätzen auftretende Druckabfall sowie dessen Minderung vorteilhaft geringer sind als bei denen des Ausführungsbeispieles der Fig. 4.

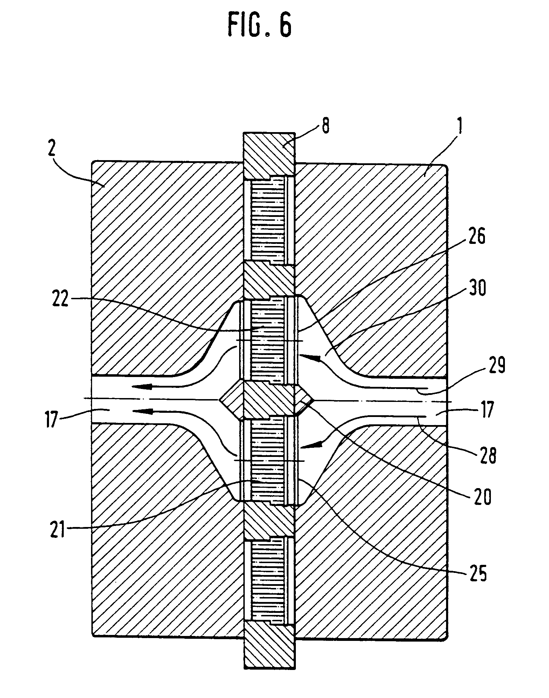

Die bei der Verwendung von Siebscheiben gemäß Fig. 4 und 5 stattfindenden Strömungen der Kunststoffschmelze sind anhand der Fig. 6 und 7 erläutert. Fig. 6 zeigt, wie ein Schmelzestrom der Anordnung nach Fig. 4, veranschaulicht durch Pfeile 28, 29, im Erweiterungsbereiche 30 des Schmelzekanales 17 sich gabelt und über die Teilmündungen 25, 26 in voneinander getrennten Strömen zwei Siebeinsätze 21 und 22 durchsetzt. Die Fig. 7 zeigt darüber hinaus, wie bei einer Anordnung nach Fig. 5 die Pfeile 28 und 29 sich weiter verästeln und praktisch die gesamten Grundflächen der drei Siebeinsätze 21, 22 und 23 durchsetzen. Wesentlich ist hierbei, daß die Flanken bzw. Stirnflächen der Siebeinsätze gegen die Flanken der Siebscheibe 8 derart zurücktreten, daß die Schmelze bereits bei geringen Flächenüberdeckungen der Ausnehmungen 9 mit den Teilmündungen 25 und 26 in der Lage ist, tiefer einzudringen und die gesamte Oberfläche des jeweiligen Siebeinsatzes zu erreichen. So wird mit einfach und günstig gestalteten Konturen der Siebeinsätze, die an sich eine dichte Packung nicht erlauben, jeweils eine relativ große, dem Schmelzestrom gebotene Durchsatzfläche erreicht und damit ein nur geringer Druckabfall erzielt, der auch in den Momenten des Wechselns der Siebeinsätze durch Weiterschalten der Siebscheibe 8 nicht bzw. nicht wesentlich ansteigt.

An der Eintrittsposition, bspw. der Position, in der Ring 31 der Fig. 1 steht, sind in der Figur 1 dargestellte Vorrichtungen zum Fluten der in der den Ring enthaltenden Ausnehmung verbleibenden Hohlräume vorgesehen. Diese können in einem oder auch beidseitig angeordneten und in hoher Position mündenden Entlüftungskanälen 32 bestehen, denen, zweckmäßig in relativ tiefer Position, mit Schmelze beaufschlagte Flutungskanäle 33 gegenüberstehen. Entsprechend aber wird auch vor dem Verlassen des durch die Platinen 1, 2 bestimmten Gehäuses, d.h., in der Position des Ringes 34, nach Möglichkeit die Schmelze abgezogen. Dieses kann durch Abzugskanäle 35 für die Schmelze in den unteren Bereichen bewirkt werden, während eine die Schmelze ausblasende Druckluftleitung 36 in den oberen Bereichen mündet.

So wird in jedem Falle ein Schmelzefilter erreicht, das sich durch große Filterflächen ebenso auszeichnet wie durch die Möglichkeit, ohne wesentliche Druckschwankungen Filter zu wechseln, wobei dieses Wechseln noch durch einen relativ großen Freiraum ebenso erleichtert wird wie durch das Entfallen des Einbringens mit ausgerichteten Konturen der Siebeinsätze.

## Patentansprüche

1. Schmelzefilter für die Reinigung von insbesondere von Extrudern abgegebenen Kunststoffschmelzen mit einer zwischen zwei Platinen (1, 2) drehantreibbaren Siebscheibe (8) die entlang einer Kreisbahn (10) Ausnehmungen (9) aufweist, in die als Filter Siebeinsätze (21, 22, 23, 24) in Form jeweils eines mit einer Filterschichten (13) stützenden Lochscheibe (12) ausgestatteten Ringes (11) einsetzbar und entnehmbar sind, und mit einem die Platinen (1, 2) im Bereiche der Kreisbahn (10) durchstoßenden Schmelzenkanal (17) sowie mit einem der Siebscheibe (8) zugeordneten kraftbetriebenen Klinkenantrieb (15 bis 19), bei dem jeweils mindestens zwei der Siebeinsätze im Schmelzestrom gehalten sind,
**dadurch gekennzeichnet,**
daß der Schmelzekanal (17) eine kreisförmige Eintrittsöffnung (18) aufweist, von der aus innerhalb der einen, ersten Platine (1) er sich mit zunehmender Eindringtiefe zunächst in Umfangsrichtung der Kreisbahn (10) erweitert und dann teilt und mit zwei voneinander getrennten Teilmündungen (25, 26) auf die in Arbeitsposition stehenden Siebeinsätze (21, 22, 23) gerichtet ist, und daß hinter der Siebscheibe (8) diesen Teilmündungen (25, 26) gegenüberstehend zwei Schmelze-Teilkanäle auf die kreisförmige Austrittsöffnung der anderen, zweiten Platine (2) zulaufen.

2. Schmelzefilter nach Anspruch 1,
**dadurch gekennzeichnet,**
daß die Enden der Schmelze-Teilkanäle über einen geringen Längenabschnitt normal auf den Teil-Mündungen (25, 26) bzw. den Oberflächen der Filtereinsätze (21, 22, 23) stehen.

3. Schmelzefilter nach Anspruch 1 oder 2,
**dadurch gekennzeichnet,**
daß die durch die Schmelze-Teilkanäle gebildeten, an die Siebscheibe (8) angrenzenden Teilmündungen (25, 26) im Teilungsabstand der Ausnehmungen (9) der Siebscheibe (8) angeordnet sind.

4. Schmelzefilter nach mindestens einem der Ansprüche 1 bis 3,
**dadurch gekennzeichnet,**
daß die Ausnehmungen (9) der Siebscheibe (8) so ausgebildet und angeordnet sind, daß die minimale Breite der sie trennenden Stege 25% ihres Durchmessers unterschreitet.

5. Schmelzefilter nach mindestens einem der Ansprüche 1 bis 4,
**dadurch gekennzeichnet,**
daß die Höhe der Siebeinsätze (21 bis 24) die Stärke der Siebscheibe (8) unterschreitet und die Grundflächen der Siebeinsätze nach Einbau in die Siebscheibe jeweils gegenüber deren Flanken nicht unerheblich zurücktreten.

6. Schmelzefilter nach einem der Ansprüche 1 bis 5,
**dadurch gekennzeichnet,**
daß der äußere Randbereich der Siebscheibe (8) als Klinkenrad ausgebildet ist, und daß die Anzahl der ihren Antrieb vermittelnden Klinken (19) das Einfache oder ein ganzzahliges Vielfaches der Anzahl der Ausnehmungen (9) der Siebscheibe (8) beträgt.

7. Schmelzefilter nach mindestens einem der Ansprüche 1 bis 6,
**dadurch gekennzeichnet,**
daß in Arbeitsstellung jeweils ein Siebeinsatz (21, 22) vor einer der Teilmündungen (25, 26) steht.

8. Schmelzefilter nach mindestens einem der Ansprüche 1 bis 6,
**dadurch gekennzeichnet,**
daß in Arbeitsstellung ein Siebeinsatz (22) zu gleichen Teilen Flächen der Teilmündungen (25 und 26) übergreift und die beidseitig benachbarten Siebeinsätze (21, 23) jeweils einen Bereich einer der Teilmündungen (25, 27) übergreifen.

9. Schmelzefilter nach einem der Ansprüche 1 bis 8,
**dadurch gekennzeichnet,**
daß eine ein- bzw. mehrfache Betätigung der Antriebsvorrichtung (15) die Siebscheibe (8) von einer Arbeitsstellung in die dieser folgende Arbeitsstellung führt.

10. Schmelzefilter nach mindestens einem der Ansprüche 1 bis 9,
**dadurch gekennzeichnet,**
daß die Platinen (1, 2) ein als Drehachse der Siebscheibe (8) vorgesehenes Zylinderstück (6) innerhalb eines 90° überschreitenden Zentriwinkels nur geringfügig übergreifen und von dessen Flanke aus zurücktreten, so daß die Ausnehmungen (9) der Siebscheibe (8) entlang eines großen Teiles der ihre Mittelachsen schneiden Kreisbahn (10) freistehen und einen Zugriff zu den in diese eingebrachten Siebeinsätze (21, 22, 23) erlauben.

11. Schmelzefilter nach mindestens einem der Ansprüche 1 bis 10,
**dadurch gekennzeichnet,**
daß an der Position der soeben in die Platinen (1, 2) eingetretenen sowie der direkt vor dem Austreten aus den Platinen stehenden Ringe (31, 34) Entlüftungskanäle (32) bzw. Druckluftleitungen (36) sowie Schmelze-Flutungskanäle (33) bzw. -Abzugskanäle (35) vorgesehen sind.

## Claims

1. A melt filter for the purification of plastics melts, especially those delivered by extruders, having a screen disc (8) which is able to be driven round between two plates (1, 2) and exhibits along a circular track (10) apertures (9) into which screen inserts (21, 22, 23, 24) may be inserted and removed again, each in the form of a ring (11) which is equipped with a perforated disc (12) supporting filter layers (13), the filter having a melt-channel (17) passing through the plates (1, 2) in the region of the circular track (10), as well as a power-driven pawl drive (15 to 19) which is associated with the screen disc (8) and by which at least two screen inserts at a time are held in the flow of melt,
**characterized in that**
the melt-channel (17) exhibits a circular inlet opening (18) from which with increasing depth of penetration inside the first plate (1) it widens first of all in the direction circumferential to the circular track (10) and then divides and is directed by two separate part-mouths (25, 26) at the screen inserts (21, 22, 23) lying in the working position, and that beyond the screen disc (8) two partial melt-channels lying opposite the said part-mouths (25, 26) converge upon the circular outlet opening from the other, the second plate (2).

2. A melt filter as in Claim 1,
**characterized in that**
the ends of the partial melt-channels over a short portion of their length lie normally to the part-mouths (25, 26) or respectively to the surfaces of the filter inserts (21, 22, 23).

3. A melt filter as in Claim 1 or 2,
**characterized in that**
the part-mouths (25, 26) formed by the partial melt-channels where they adjoin the screen disc (8), are arranged at the pitch of the apertures (9) in the screen disc (8).

4. A melt filter as in at least one of the Claims 1 to 3,
**characterized in that**
the apertures (9) in the screen disc (8) are made and arranged so that the minimum width of the webs separating them is less than 25% of their diameter.

5. A melt filter as in at least one of the Claims 1 to 4,
**characterized in that**
the height of the screen inserts (21 to 24) is less than the thickness of the screen disc (8) and after building into the screen disc the bases of the screen inserts in each case retreat not inconsiderably with respect to its flanks.

6. A melt filter as in one of the Claims 1 to 5,
**characterized in that**
the outer edge region of the screen disc (8) is made as a ratchet wheel, and that the number of ratchet teeth (19) providing its drive amounts to equality with or a whole-number multiple of the number of apertures (9) in the screen disc (8).

7. A melt filter as in at least one of the Claims 1 to 6,
**characterized in that**
in the working position there is one screen insert (21, 22) lying in front of every one of the part-mouths (25, 26).

8. A melt filter as in at least one of the Claims 1 to 6,
**characterized in that**
in the working position one screen insert (22) overlaps equal partial areas of the part-mouths (25 and 26) and the next screen inserts (21, 23) on either side overlap a region of one of the part-mouths (25, 27) respectively.

9. A melt filter as in at least one of the Claims 1 to 8,
**characterized in that**
one single or multiplke actuation of the driving mechanism (15) carries the screen disc (8) from one working position into the next working position.

10. A melt filter as in at least one of the Claims 1 to 9,
**characterized in that**
within a central angle exceeding 90° the plates (1, 2) only slightly overlap a piece (6) of a cylinder provided as the pivot of the screen disc (8) and retreat from its flank so that the apertures (9) in the screen disc (8) are exposed along a great part of the circular track (10) passing through their centrelines and allow access to the screen inserts (21, 22, 23) fitted in them.

11. A melt filter as in at least one of the Claims 1 to 10,
**characterized in that**
at the position where the rings (31, 34) have just entered the plates (1, 2) as well as of the rings lying directly before the exit from the plates vent channels (32) or respectively compressed air lines (36) as well as melt flooding channels (33) or melt drain channels (35) are provided.

## Revendications

1. Filtre pour masses fondues destiné à l'épuration de masses fondues de matière plastique, provenant en particulier d'extrudeuses, comportant deux plaques (1,2) entre lesquelles est situé un disque de tamisage (8) pouvant être entraîné dans un mouvement rotatif et présentant des évidements (9) disposés le long d'une trajectoire circulaire (10) dans lesquels on peut placer et dont on peut enlever comme filtres des pièces de filtration (21, 22, 23, 24) ayant la forme d'un anneau équipé d'un disque à trou (1, 2) supportant des couches de filtres (13) et comportant un passage (17) pour la masse fondue traversant les plaques (1, 2) au niveau de la trajectoire circulaire (10) ainsi qu'un entraînement mécanique à cliquet (15 à 19) disposé sur le disque de filtration (8), au moins deux des pièces de filtration étant chaque fois placées dans le courant de masse fondue, caractérisé en ce que le passage (17) pour la masse fondue présente une ouverture d'introduction (18) circulaire à partir de laquelle il s'élargit dans la première plaque (1) d'abord en direction de la périphérie de la trajectoire circulaire avec l'augmentation de la profondeur de pénétration puis il se divise et se dirige avec deux ouvertures de division (25, 26) séparées l'une de l'autre vers les pièces de filtration (21, 22, 23) se trouvant en position de travail et en ce que derrière le disque de filtration (8), ces ouvertures de division (25, 26) sont prolongées par deux passages de division de la masse fondue aboutissant à l'ouverture de sortie circulaire de l'autre deuxième disque (2).

2. Filtre pour masses fondues selon la revendication 1, caractérisé en ce que les extrémités des passages de division de la masse fondue sont, sur une petite section longitudinale, perpendiculaires par rapport aux ouvertures de division (25, 26) ou aux surfaces des pièces de filtration (21, 22, 23).

3. Filtre pour masses fondues selon la revendication 1 ou 2, caractérisé en ce que les ouvertures de division (25, 26) formées par les passages de division de la masse fondue, se trouvant à proximité du disque de filtration (8), sont disposées à une distance équivalente à celle séparant les évidements (9) du disque de filtration (8).

4. Filtre pour masses fondues selon au moins une quelconque des revendications 1 à 3, caractérisé en ce que les évidements (9) du disque de filtration (8) sont exécutés et disposés de telle manière que la largeur minimale de la paroi les séparant est inférieure à 25 % de leur diamètre.

5. Filtre pour masses fondues selon au moins une quelconque des revendications 1 à 4, caractérisé en ce que la hauteur des pièces de filtration (21 à 24) est inférieure à l'épaisseur du disque de filtration (8) et en ce que les fonds des pièces de filtration, après montage dans le disque de filtration, ne sont pas nettement en recul par rapport aux bords de celui-ci.

6. Filtre pour masses fondues selon au moins une quelconque des revendications 1 à 5, caractérisé en ce que le bord externe du disque de filtration (8) est exécuté comme une roue à cliquets et en ce que le nombre de cliquets (19) participant à l'entraînement est égal à une fois ou un nombre entier de fois au nombre d'évidements (9) du disque de filtration (8).

7. Filtre pour masses fondues selon au moins une quelconque des revendications 1 à 6, caractérisé en ce qu'en position de travail, une pièce de filtration (21, 22) se trouve chaque fois devant une des ouvertures de division (25, 26).

8. Filtre pour masses fondues selon au moins une quelconque des revendications 1 à 6, caractérisé en ce qu'en position de travail, une pièce de filtration (22) empiète sur des parties identiques de la surface des ouvertures de division (25 et 26) et en ce que les pièces de filtration voisines de chaque côté (21, 23) empiètent chaque fois sur une partie des ouvertures de division (25, 27).

9. Filtre pour masses fondues selon une quelconque des revendications 1 à 8, caractérisé en ce qu'un actionnement simple ou multiple du dispositif d'entraînement (15) déplace le disque de filtration (8) d'une position de travail dans la position de travail suivante.

10. Filtre pour masses fondues selon une quelconque des revendications 1 à 9, caractérisé en ce que les plaques (1, 2) n'empiètent que légèrement sur une pièce cylindrique (6) prévue comme axe de rotation du disque de filtration (8) dans un angle de centrage dépassant 90° et qui sont en recul par rapport à ses bords de telle manière que les évidements (9) du disque de filtration (8) sont libres sur une grande partie de la trajectoire circulaire (10) coupant leur axe central et qui permettent un accès aux pièces de filtration (21, 22, 23) placées dans cette trajectoire.

11. Filtre pour masses fondues selon une quelconque des revendications 1 à 10, caractérisé en ce qu'on a prévu au niveau de la position des anneaux (31, 34) qui se trouvent entre les plaques (1, 2) ainsi que de ceux qui sortent des plaques des canaux de désaération (32) ou des conduites d'air sous pression (36) ainsi que des canaux d'injection (33) et d'évacuation (35) de la masse fondue.
